# EUROPEAN PATENT APPLICATION

(11) **EP 1 666 391 A1**
(43) Date of publication of application: **07.06.2006**
(21) Application number: 06110277.8
(22) Date of filing: 22.02.2006
(51) Int. Cl.: B65G 47/91, B65B 5/08, B65B 5/10, B65B 35/38, B65B 39/00

(54) **Pneumatic system for the seizure and transfer of packs of products**

(30) Priority: 29.08.2005 IT MI20051607
(71) Applicant: CT Pack S.r.l., 44030 Fossalta di Copparo FE (IT)
(72) Inventor: Davi', Daniele, 44100 Ferrara (IT)
(74) Representative: Coppo, Alessandro

(57) **Abstract**

A pneumatic system for seizing (10) and transferring packs (11) of products, suitable for transferring packs from a feeder and inserting them into bags (12), comprising at least one opening (20) connected at one end to the suction plant (15) and having, at the other end, a pair of suction mouthpieces (21) separated by a septum (22)

## Description

The present invention relates to a pneumatic system for seizing and transferring packs of products.

More specifically, the invention relates to a pneumatic system for seizing and transferring sealed packs of products, destined for inserting the same inside bags.

The packaging of products grouped into sealed packs, is currently effected using boxes, for example made of cardboard, in which the formed and sealed packs are inserted.

In this respect, in the known art, there are pneumatic seizing devices comprising suckers made of elastic material equipped with an inner suction channel destined for the seizing of packs also having delicate contents, but which do not pay particular attention to possible oscillations of the pack during the transporting and releasing phase, as these devices are destined for the filling of rigid containers by the falling of the pack.

For reasons linked to preserving the product fragrance, which, in the case of aromatic or spicy products, such as tea, is of fundamental importance, the use of bags for the external packaging, instead of boxes, has become widely diffused.

The packaging of containers which are limitedly rigid or semi-soft, such as a bag, however, causes considerable problems, for example in the insertion phase of the pack or in the arrangement of several packs in a bag.

This problem is particularly felt with respect to a rapid and effective seizure and handling and also to the necessity of an orderly arrangement of the packs inside the bag.

A different drawback of the types of packaging according to the known art, relates to the materials used, polyethylene and other plastic materials for the packs and box cover and cardboard, i.e. cellulose material, for the box itself.

These different materials lead to the necessity of a differentiated collection and impose, according to the laws in force in certain Countries, additional costs for the producer.

The necessity is currently felt for effecting packaging by means of packs inserted into bags and providing a system for the seizure and transfer of packs of products and in particular for soft packages having variable configurations.

One of the main objectives of the present invention consists in providing a pneumatic system for the seizure and transfer of packs of products, in particular soft packages, destined for an apparatus which allows one or more packs to be inserted inside a bag in an automated and optimized form.

The Applicant has found that it is possible to effect the packaging of packs inside bags by means of an insertion apparatus comprising a pneumatic system for the seizure and transfer of packs of products, which allows the rapid seizure and the firm holding of the package during its movement and which allows the guided and orderly insertion of one or more packs of products inside a bag.

An aspect of the present invention relates to a pneumatic system for the seizure and transfer of packs of products suitable for transferring packages from a feeder and inserting them inside bags, according to the disclosure of claim 1.

Further characteristics of the invention are the object of the dependent claims.

The characteristics and advantages of a pneumatic system for the seizure and transfer of packs of products according to the present invention will appear more evident from the following illustrative and nonlimiting description referring to the schematic drawings wherein:

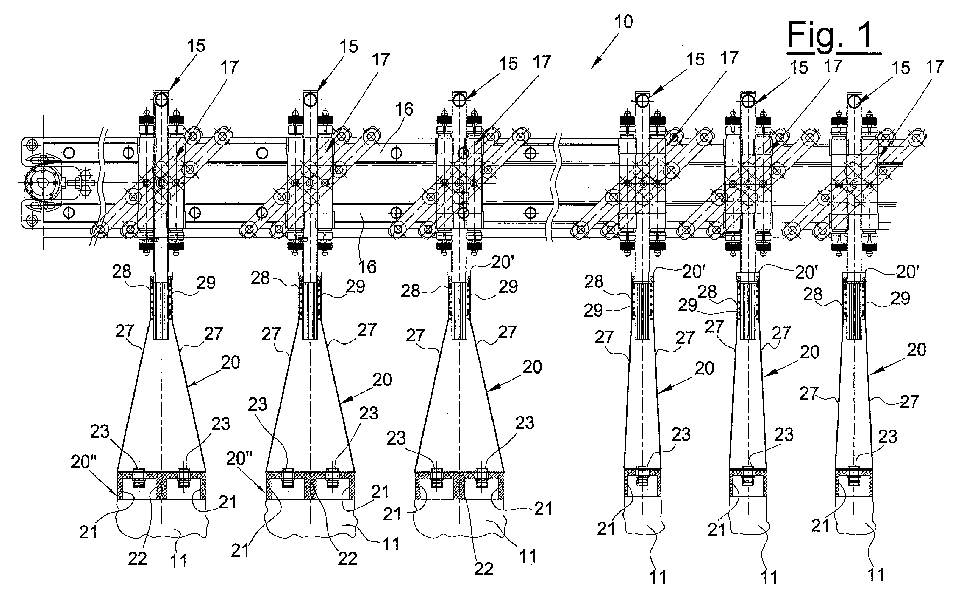

figure 1 is a raised, partially sectional schematic view of the pneumatic system according to the invention;

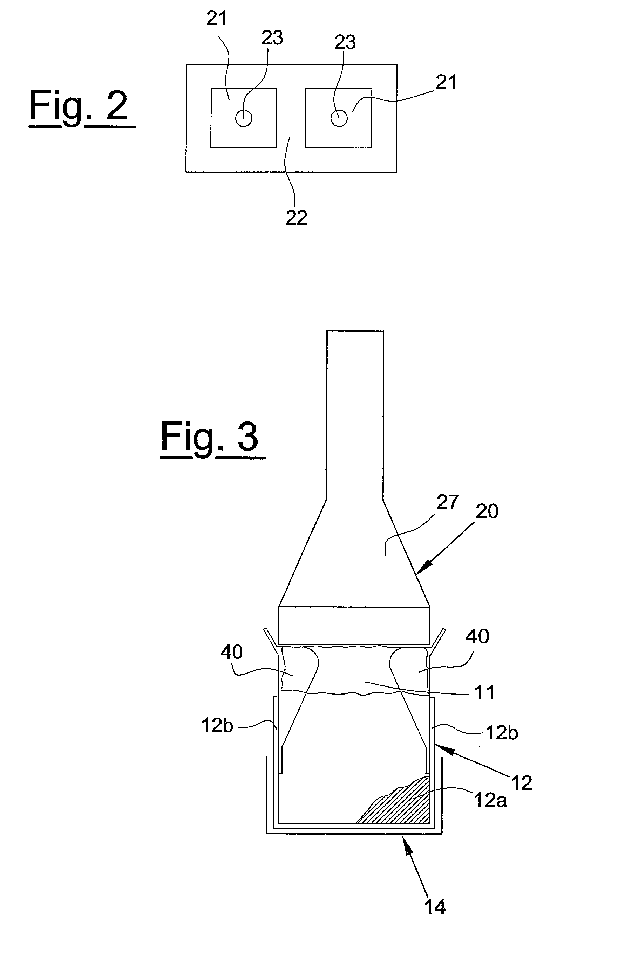

figure 2 is a plan view from below, of a detail of the pneumatic system according to the invention;
figure 3 is a raised partial section which represents the insertion phase of a package inside a bag by means of the pneumatic system according to the invention.

With reference to the figures, these illustrate a pneumatic system for the seizing 10 and transfer of sealed packs 11 of products, preferably food products, destined to operate in combination with an apparatus for the insertion of the sealed packs 11 inside bags 12.

The system according to the invention can obviously be used for any kind of products, packed inside a package 11 of the rigid or soft type, and can operate in combination with any insertion apparatus, operating from above.

The system according to the invention can be electively used in the field of the packaging of fragrant and aromatic food products, such as tea which, once inserted in bags, is first sealed inside packs 11 and is then packed into bags 12 having a limited rigidity.

In particular, the bags are made of plastic materials such as polyethylene for food or similar, and have a limited rigidity which allows self-sustainment in an open position and in elevation.

In this respect, the bag 12 preferably has a substantially parallelepiped form with side walls 12a positioned parallel to the translation direction of the bags and front walls 12b, transversal to said direction.

The pneumatic system according to the invention is described with reference to a single production line and bags 12 suitable for containing two overlying packages 11, in industrial applications however, it can be a series, consisting of parallel production lines, and various rows of overlying packages can be inserted inside the bags.

The number of lines or packages to be inserted in each bag can vary according to the production demands and in relation to the dimensions of the products.

The pneumatic system object of the present invention, suitable for transferring packages from a feeder and inserting them inside bags 12, comprises at least one opening 20 connected to a first end 20' to a suction plant 15 by means of a tang 28 and having at a second end 20" a pair of suction mouths 21 separated by a septum 22.

This system is integrated in a filling station of a packaging plant and is situated near a feeding line of bags coming from a forming plant or from a distributor and supported on trays 14 suitable for containing and also supporting the bags.

The pneumatic system according to the invention effects the seizure of packs, starting from a pack feeder 11, which have been previously sealed, containing the products.

Said pack feeder 11 can consist of a parallel or transversal line with respect to the bag feeding line, or can envisage other feeding means allowing an adequate rate.

As the openings 20 are part of the system 10, they are advantageously numerous, in the order of 10 or more, to allow the seizure and insertion of several packs 11, by optimizing and the accelerating the operations.

Each opening 20 also has suction nozzles 23 which are situated on the mouths 21 and it is advantageously tapered towards the first end which is connected to the suction.

In this way, the suction flows are optimized and at the same time, the presence of tilted walls 27 of the opening facilitates the insertion operations of the package inside the bag, and, above all, the extraction of the opening from the bag without interfering with the edges of the bag or with stiffening means 40 and insertion guides are envisaged at the inlet of the bag to facilitate the insertion of the package.

Each opening is supported by at least one bar 16, preferably a pair of bars 16 and is equipped with leverisms and translators 17, suitable for transferring the package from the seizure point to the deposit point.

Each opening can be rotated by about 90°C around the sleeve 28 in relation to the orientation of the packages and bags, rapidly and without using tools. By extracting the opening 20 from the tube 15, the opening 20', having a square section, is disengaged by compressing a spring 29 positioned along the tang 28. Once rotated, the spring allows the opening to be inserted onto the tube, whereas the opening 20', having a square section, ensures that the orientation is maintained. A rubber gasket guarantees the seal of the suction circuit in both configurations.

The squaring and stiffening means 40 are mainly aimed at squaring the mouth of the bag and effecting the stiffening necessary for allowing the rapid and precise introduction of the packages 11.

These means advantageously operate on the short sides of the bag and therefore it is necessary to rotate the package before the insertion.

In particular, these squaring and stiffening means 40 are electively used with packages of the soft type, for which they also have a guiding function for correct positioning inside the bag.

For packages of the soft type, the use of the device according to the invention is particularly advantageous as, through its configuration at the ends, the opening is capable of firmly holding the package on a quadrangular surface, facilitated by the fact that the container of the package is necessarily impermeable and sealed and consequently the suction of the opening operates on it in an optimized way, generating a tensioning of the container around the contents, which allows a firm hold.

## Claims

1. A pneumatic system for the seizure (10) and transfer of packs (11) of products, suitable for transferring packages from a feeder and inserting them into bags (12), **characterized in that** it comprises at least one opening (20), connected at a first end (20') to a suction plant (15) and having, at a second end (20"), a pair of suction mouthpieces (21) separated by a septum (22) and equipped with nozzles (23).

2. The pneumatic seizure system (10) according to claim 1, wherein said suction mouths (21) generate a tensioning of the package container, firmly enveloping the contents, allowing a strong hold without oscillations.

3. The pneumatic seizure system (10) according to claim 1, wherein said at least one opening (20) has tilted walls (27), which are tapered in the direction of the first end (20') connected to the suction (15).

4. The pneumatic seizure system (10) according to claim 1, wherein the presence of a series of openings (20) connected to the suction plant (15), is envisaged.

5. The pneumatic seizure system (10) according to claim 1, wherein each opening (20) is supported by at least one bar (16), preferably a pair of bars (16) and is equipped with leverisms and translators (17) suitable for transferring the product from the seizure position to the insertion position.

6. The pneumatic seizure system (10) according to claim 1, wherein each opening (20) can be rotated by about 90°C rapidly and without using tools, guaranteeing the solidity of the hold.

7. The pneumatic seizure system (10) according to claim 1, wherein said system is envisaged for cooperating with an insertion apparatus of packages into bags, equipped with squaring and stiffening means (40) mainly aimed at squaring the mouth of the bag and effecting the necessary stiffening to allow the rapid and precise introduction of the packages (11).

8. A packaging plant equipped with a pneumatic seizure system (10) according to any of the previous claims.
